Europäisches Patentamt

**European Patent Office**

**Office européen des brevets**

(11) Publication number: **0 089 777**
**A2**

(12) **EUROPEAN PATENT APPLICATION**

(21) Application number: **83301257.8**

(22) Date of filing: **08.03.83**

(51) Int. Cl.³: **A 23 C 19/05**
**A 23 C 19/06**

(30) Priority: **20.03.82 NZ 199366**

(43) Date of publication of application:
**28.09.83 Bulletin 83/39**

(84) Designated Contracting States:
**AT BE CH DE FR GB IT LI LU NL SE**

(71) Applicant: **NEW ZEALAND DAIRY BOARD**
**Pastoral House 25 The Terrace**
**Wellington 1(NZ)**

(72) Inventor: **Hale, Arthur Gordon**
**Pastoral House 25 The Terrace**
**Wellington 1(NZ)**

(72) Inventor: **King, Donald Wilford**
**Pastoral House 25 The Terrace**
**Wellington 1(NZ)**

(72) Inventor: **Persson, John Edward**
**Pastoral House 25 The Terrace**
**Wellington 1(NZ)**

(72) Inventor: **Kirkpatrick, Kenneth James**
**Pastoral House 25 The Terrace**
**Wellington 1(NZ)**

(74) Representative: **Jones, Ian et al,**
**POLLAK MERCER & TENCH High Holborn House 52-54**
**High Holborn**
**London WC1V 6RY(GB)**

(54) Improvements in or relating to methods of manufacturing a foodstuff precursor and/or foodstuffs manufactured thereby.

(57) A method of manufacturing a foodstuff or a foodstuff precursor, said method comprising steps of forming a liquid protein composition with the desired ingredients, modifying the protein using a coagulating enzyme but without allowing coagulation, passing the liquid so modified along a flow path while adjusting the pH and heating the liquid to cause coagulation of the protein into small curd centres within the flow, separating the coagulated protein from the remainder of the liquid, mixing the coagulated protein with additives, if any, and forming the resultant mix into a foodstuff or foodstuff precursor. If the product is a foodstuff precursor it can be admixed with other foodstuffs and/or additives to give rise to a resultant foodstuff.

EP 0 089 777 A2

Improvements in or relating to methods of manufacturing a foodstuff or foodstuff precursor and/or foodstuffs manufactured thereby.

This invention relates to methods of manufacturing foodstuffs and/or foodstuffs manufactured thereby.

The present invention is primarily concerned with the manufacture of a cheese or cheese-like product from milk or a milk product. However, the invention is considered to have a broader application and other liquid protein compositions with suitable ingredients may also be the subject of the present process.

Traditional processes for manufacturing cheese involve considerable expertise and skill and produce a recognised range of distinctive cheeses. The range of texture and flavour variation is considerable but traditional cheese or cheese-like products is not a popular food among a significant percentage of the earth's population.

Further the apparatus employed in traditional cheese making manufacture is specialised equipment and consequently the plant can be used solely for the production of cheese and in some instances only a relatively specific type of cheese. The present invention is concerned with developing a process which is versatile and may use apparatus that can also be used to produce other milk products or the range of finished product can be widely varied to accommodate a wide range of tastes or the fluctuating and volatile market situations.

It is an object of the present invention to provide a method of manufacturing a foodstuff, a foodstuff precursor and/or foodstuffs produced thereby which will go some way to meeting the abovementioned *desiderata* or which will at least produce a useful alternative over known methods currently available.

Accordingly the invention may broadly be said to consist in a method of manufacturing a foodstuff or a foodstuff precursor, said method comprising steps of forming a liquid protein composition with the desired ingredients, modifying the protein using a coagulating enzyme but without allowing coagulaton, passing the liquid so modified along a flow path while adjusting the pH and heating the liquid to cause coagulation of the protein into small curd centres within the flow, separating the coagulated protein from the remainder of the liquid, mixing the coagulated protein with additives, if any, and forming the resultant mix into a foodstuff or foodstuff precursor.

With the production of some foodstuffs the method includes a wash step where the removed coagulated protein is washed and then separated prior to the addition of the required additives.

The liquid protein composition is normally a composition of milk adjusted to the desired solids and fat content and in the process is heated as it passes along the flow path using direct or indirect heating means.

The pH of the protein composition is adjusted by injecting acid or other suitable additives therein and thoroughly mixing.

It is normally necessary to allow a reaction time to occur after the heating and adjustment of pH and prior to further processing.

A bacterial culture may be introduced into the liquid protein composition at the time of introducing the coagulating substance.

The coagulated protein or curd may be treated after the initial separation or during the washing cycle to induce the desired modification thereto.

The additives which can be incorporated with the final flow of dry fryable curd include salt, flavouring, fat or oil.

The curd may be extruded or delivered into presses for final processing.

The present and preferred embodiment of the invention will be described with reference to milk or milk products.

A composition of milk with colouring added if necessary is adjusted to the desired solids and fat content. This can be achieved by either adding or removing fat. It can also have other products incorporated therein such as soya protein, wheat gluten or whey protein once the desired composition has been achieved the mix may if necessary be homogenised and/or heat treated with or without adjustment of pH. It will be understood however that the process will work with ordinary skim milk without adjustment.

The prepared liquid protein composition is then temperature adjusted and held in tanks or vats. The temperature is lowered below that temperature which will permit rapid coagulation.

The liquid has added thereto a coagulating substance which normally would be rennet but it could be any other suitable coagulating enzyme.

At this stage of the process it may be desirable to incorporate a selected bacterial culture. This is useful for flavour development. It can also be valuable for other processing reasons because there may be some lactose left and the bacteria introduced can feed on the lactose without any undesirable side effects in the finished product.

The protein combination with the coagulating enzyme is held for a sufficient time to allow the enzyme to cleave the bond of the kappa-casein and expose the casein micelle. This modified protein would coagulate but for the temperature control previously referred to.

At this stage the modifed liquid protein composition is pumped through a plant and subjected to "in line" treatment. As a first stage acid is injected into the line so that the milk product will reach the desired pH. Normally the pH is between 4.5 and 6.5 but individual products would require closer tolerances depending on the particular food substance and the characteristics thereof being produced by the process.

Other minerals and salts of minerals could be introduced at this stage for a number of purposes including the texture and hardness of the curd and other characteristics which will be developed further on in the process. The substances introduced are thoroughly mixed with the liquid flow using for example in line static mixers.

The liquid is then heated either by direct or indirect heating. In the case of direct heating steam can be injected into the liquid flow and in the case of indirect heating a jacketed heater or heat exchanger is associated with the pipe along which the liquid is being pumped. The temperature is increased to an upper limit which will be consistent with the parameters of the process, for example up to 55°C and the flow rate is high inducing controlled substantial turbulence into the liquid being passed therealong. This prevents any large build up of curd and means that the protein coagulates into small particulate curd centres.

It is necessary to allow time for the reaction to advance to the desired degree. Again this must be accepted as a variable parameter depending upon the characteristic of the foodstuff being produced. After the desired coalescence and syneresis the liquid is passed to a separator to separate the curd from the whey. In the preferred in line version the liquid is caused to flow through a "holding tube" while this process advances. However it would be feasible for the liquid to move into a holding vat at this stage.

The curd collected from the separator may be washed by introducing water into the curd and arranging mixing and further advancement along a pipe. Again this stage could be completed in a vat but it is preferred to maintain the in line technique. At the time the water is added other minerals and acids could also be incorporated with the water.

The curd is then again separated by an appropriate mechanical separator to the desired moisture content. At this stage a stream of comparatively "dry" curd particles will be passed along the conduit and at that time additives and ingredients can be blended in to determine the final characteristics and composition of the cheese or cheese-like products being produced. These additive ingredients could include salt, fat or oil, flavouring and it would be appreciated that the very wide range is available, thereby enabling a wide range of finished products to be produced.

The stream of material is then passed to a compressing means. In one form this could be an extrusion head so that the material is extruded under pressure. In another version the material could be delivered into presses.

Alternatively after separation the curd could be passed directly to a food processing kettle as the prime feed stock for the kettle.

The process according to the present invention introduces a very wide range of flexibility in the process of producing the cheese or cheese-like products. These are stages where the characteristic of the curd can be modified and the flavouring and colour of the finished product adjusted so that a product is produced with a very broad spectrum of consumer appeal.

Also the equipment which can be used in this process is readily and rapidly modified to produce other milk products thereby allowing flexibility in utilisation of plant.

Example 1

To 18000 litres of pasteurized skimmilk at 10° ± 1°C was added 1 litre of calf rennet extract and 18 litres of Streptococcus cremoris culture. The milk was held at this temperature unagitated for 16 hours. The temperature and time combination are important to prevent gelling yet achieve the required amount of casein destabilization.

The enzyme treated milk was acidified to a pH of 5.4 continuously in-line by injecting food grade acid, heated to 45°C, held for approximately 5 seconds. Afterwards the curds and whey were separated on a screen. The curd was then mixed with acidified water at 43°C and pH 1.5 at a relative flow rate of 1:5, water:skimmilk.

The curd/water mixture was then pumped through a curd mill before being separated on a screen again. Sufficient fresh water at 40°C was added to the curd to maintain a suspension and optimal centrifuge feed temperature. The mixture was pumped to a horizontal solid bowl centrifuge. The discharged curd was then salted with 2% by weight and pressed under vacuum into blocks, packed and cooled. After storage for 2 - 3 days the product became translucent and honey coloured and the texture was tough and elastic.

The analysis by weight of the product formed was moisture 53%, salt 2% and fat 1%.

It was found in subsequent experiments that the appearance and texture could be varied significantly by reducing the pH of precipitation, the fat and moisture content. It was found that as the pH of precipitation reduced, the colour became more opaque and the texture was friable. As the fat and moisture increased the body became softer. With increased salt content, the effect of aging was reduced.

Example 2

It was found that the process description in example 1 was suitable for a product with a fat content up to a maximum of 10% by weight and preferably around 1% by weight.

For a product with a fat content of greater than 10% by weight and up to 25% by weight, high fat cream, butter or anhydrous milkfat (AMF) may be added to the dried curd stage immediately after the horizontal solid bowl centrifuge. It was found necessary to cool the curd to approximately 30°C to facilitate mixing the fat.

A blender was also found to be the most effective means of mixing the fat to the curd to ensure full mixing without loss of fat. The cream and AMF were temperature controlled to 6°C and 40°C to prevent gelling and to aid pumping respectively. Butter was found to be more suitable in a batch process.

The resultant product was of a more friable texture than that produced in example 1 as the fat physically coats the individual curd particles yet block cohesion was maintained and no weeping of fat from the block was noticed.

It is felt preferable to restrict the fat level in the product to around 5% by weight with further fat added to suit particular requirements when ultimately processing the foodstuff.

## Example 3

The skimmilk was heated to 85°C and held for 6 minutes to promote coprecipitation of the milk proteins. After cooling, the milk was processed in a similar manner to the examples 1 and 2. This enabled the incorporation of approximately 70% by weight of the whey proteins. The resultant product contained a more nutritional protein balance and was of a slightly softer texture than the equivalent product mentioned hitherto.

## Example 4

A specially treated wheat gluten suspension of 3% by weight total solids was added to skimmilk at a 10% rate. The process described in example 1 was then followed. A product similar to that in example 3 was produced but having a doughy flavour. Compositionally wheat gluten had replaced the whey protein protion and demonstrated the ability to enhance the protein and vitamin structure of the product depending on the final foodstuff required.

The abovementioned basic process (example 1) produces a product with a typical composition (by weight) of:

Fat           1.0%
Protein      41.5%
Minerals      2.5%
Moisture     53.0%
Salt (NaCl)   2.0%

which is suitable for use either immediately following production or after aging.

The preferred use of the products resulting from the preceding process variations is for incorporation as a raw material into processed foodstuffs. When product from any of the examples is used in a high proportion (over 80% of the solids-not-fat) in a young state, high viscosities, high elasticity and lack of natural flavour will be experienced in the processed foodstuffs. A blend of mature cheese (20% by weight) helps overcome this effect.

Allowing the product to age for one month prior to use also results in a significant reduction in viscosity during processing. It was found that provided the dry matter in the processed foodstuff was not required to be more than 53% by weight all of the non fat dry matter could be supplied by the curd directly from the horizontal solid bowl centrifuge. The finished product was characterised by a highly elastic body and absence of natural flavour.

Typically an 80:20 by weight mix of the product with mature cheese can be used with fat supplied by the use of plastic cream (75% by weight fat). Many types of polyphosphate and citrate emulsifying salts are suitable in a range of 1.5 - 3.5% by weight, the high proportion of salts were required in the higher fat processed foodstuff.

In the manufacture of high moisture (48 - 55% by weight) processed foodstuffs it was found preferable to use the material directly from the horizontal solid bowl centrifuge in that the protein which has undergone very little destabilization aids in the stability of the high fat (60% by weight fat in the dry matter) finished product.

CLAIMS:

1.      A method of manufacturing a foodstuff or a foodstuff precursor, said method comprising steps of forming a liquid protein composition with the desired ingredients, modifying the protein using a coagulating enzyme but without allowing coagulation, passing the liquid so modified along a flow path while adjusting the pH and heating the liquid to cause coagulation of the protein into small curd centres within the flow, separating the coagulated protein from the remainder of the liquid, mixing the coagulated protein with additives, if any, and forming the resultant mix into a foodstuff or foodstuff precursor.

2.      A method as claimed in claim 1 including the step of washing with water the removed coagulated protein prior to final separation and the addition of the required additives.

3.      A method as claimed in claim 1 wherein the pH of the said liquid is adjusted to between 4.5 and 6.5.

4.      A method as claimed in claim 1 including the step of introducing a bacterial culture into the said liquid protein composition at the time of introducing the coagulating substance.

5.      A method as claimed in claim 1 including the step of allowing the coagulated protein to be treated after initial separation or during the washing cycle to induce the desired modification to the curd.

6.      A method as claimed in claim 1 wherein at least one additive selected from the consisting of salt, flavouring, fat and oil is incorporated with the final flow of the coagulated protein.

7.      A method as claimed in claim 1 wherein the liquid protein composition comprises a composition of milk adjusted to the desired solids and fat content.

8.      A method as claimed in claim 7 wherein the adjusted composition of milk can incorporate therein soya protein, wheat gluten or whey protein.

9. A method as claimed in claim 7 or 8 wherein the temperature of the composition of milk is lowered below that temperature which will permit rapid coagulation before adding a suitable coagulating substance.

10. A method as claimed in claim 9 including the step of introducing to the composition of milk a selected bacterial culture for flavour development and to feed on any lactose in the milk composition.

11. A method as claimed in claim 1 wherein the liquid protein composition is left with the coagulating enzyme for sufficient time to allow the enzyme to cleave the bond of the kappa-casein and expose the casein micelle but at a temperature to minimize coagulation.

12. A method as claimed in claim 11 wherein the temperature is less than 25°C.

13. A method as claimed in claim 1 wherein the coagulated protein is extruded or delivered into presses for final processing.